# EUROPÄISCHE PATENTSCHRIFT

(11) **EP 1 477 349 B1**
(45) Veröffentlichungstag und Bekanntmachung des Hinweises auf die Patenterteilung: **12.03.2008**
(21) Anmeldenummer: 04002268.3
(22) Anmeldetag: 03.02.2004
(51) Int. Cl.: B60J 5/04

(54) **Seitenaufprallträger**
Side impact beam
Poutre d' enfoncement lateral

(30) Priorität: 14.05.2003 DE 10321581
(43) Veröffentlichungstag der Anmeldung: 17.11.2004
(73) Patentinhaber: Benteler Automobiltechnik GmbH, 33104 Paderborn (DE)
(72) Erfinder: Gehringhoff, Ludger, 33106 Paderborn (DE)
(74) Vertreter: Ksoll, Peter

(56) Entgegenhaltungen:
- EP-A1- 1 186 453
- EP-A1- 1 266 780
- EP-A2- 1 099 581
- WO-A-97/36761
- WO-A-02/060712
- DE-A1- 19 647 334
- DE-A1- 19 654 376
- US-B1- 6 227 609

## Beschreibung

Die Erfindung betrifft einen Seitenaufprallträger gemäß den Merkmalen im Oberbegriff von Patentanspruch 1.

Seitenaufprallträger dienen dem Schutz von PKW-Insassen vor Verletzungen bei einem seitlichen Anprall. Sie kommen als Türverstärkungen zum Einsatz.

Eine Rohrkonstruktion ebenso wie eine Faltkonstruktion eines Seitenaufprallträgers mit trapezförmig flach verbreiterten Endabschnitten gehen aus der EP 0 728 607 A2 hervor. Die WO 94/07709 offenbart einen Seitenaufprallträger, der auf dem überwiegenden Teil seiner Länge ein im Querschnitt hutförmiges Profil aufweist mit einem Steg und zwei Schenkeln, wobei das Profil sich zu den türsäulenseitigen Endabschnitten hin sowohl in der Breite als auch in der Höhe verringert.

Solche Seitenaufprallträger werden meist aus Ziehblech gefertigt. Die offenen Profile besitzen den Vorteil, dass sie in der Regel nur aus einem Teil bestehen und meist leichter als Rohrausführungen sind.

Durch die DE 92 15 425 U1 zählt ein Seiten- bzw. Türaufprallträger zum Stand der Technik mit einem Aufprallhohlprofil, in das ein Versteifungsprofil integriert wird. Die Versteifungsprofile können unterschiedliche Querschnittsgestalt besitzen, wobei die Enden eines Versteifungsprofils durch Abschrägungen, Einschnitte oder Ausnehmungen geschwächt sind.

Aus der DE 296 20 079 U1 geht ein Seitenaufprallträger hervor mit einem U-förmigen Längsprofil, bei welchem die Höhe von der Mitte ausgehend jeweils zu den Enden des Längsprofils entsprechend einem gleichförmigen oder ungleichförmigen Kurvenverlauf stetig abnimmt.

Die Seitenaufprallträger sollen die Türstruktur versteifen und Energie beim Seitencrash absorbieren. Bislang ist man davon ausgegangen, dass die Seitenaufprallträger in Abhängigkeit von der Grundkonstruktion des Fahrzeugs eine möglichst hohe Steifigkeit quer zur Fahrtrichtung aufweisen sollen. Bei den bekannten, vornehmlich bei den trapezförmigen Profilen hat sich jedoch gezeigt, dass in lokalen Bereichen sehr starke Dehnungen bis zu 40 % auftreten, insbesondere in den Längskantenbereichen zwischen Steg und Schenkeln. Hierbei kann es bei dynamischer Belastung zu einem Knicken bis hin zum Brechen der Bauteile kommen. Das Verformungsverhalten erscheint folglich verbesserungswürdig.

Der Erfindung liegt daher ausgehend vom Stand der Technik die Aufgabe zugrunde, einen im Crashverhalten verbesserten Seitenaufprallträger zu schaffen, mit einem belastungsoptimierten Querschnitt und homogenem

Verformungsverhalten.

Die Lösung dieser Aufgabe besteht in einem Seitenaufprallträger gemäß den Merkmalen von Patentanspruch 1.

Kernpunkt bildet die Maßnahme, dass der Boden des Längsprofils halbrohrartig gekrümmt ist und die sich an den Boden anschließenden Schenkel bezogen auf die vertikale Mittellängsebene mit einem Öffnungswinkel von größer oder gleich 10° nach außen gestellt sind. Hierdurch ist der Querschnitt belastungsoptimiert. Es erfolgt eine deutliche Reduzierung von hohen lokalen Spannungen bzw. Dehnungen. Diese können auf kleiner 10 % reduziert werden. Das Verformungsverhalten des erfindungsgemäßen Seitenaufprallträgers ist homogen. Knicken und Brechen werden wirksam reduziert bzw. gänzlich unterbunden.

Bezogen auf die Mittellängsebene sind die Längsprofile symmetrisch ausgebildet. Die Steigung kann man als exponentiell, also gemäß einer Exponentialfunktion verlaufend bezeichnen.

Vorzugsweise sind an den Längskanten der Stege quer abstehende Flansche vorgesehen, wie dies Patentanspruch 2 vorsieht. Diese sind in Richtung zum Boden von den Schenkeln nach hinten abgeknickt.

Für die Fertigung des Seitenaufprallträgers kommen dünnwandige Metallbleche, insbesondere Stahlbleche mit einer Dicke zwischen 1,0 mm bis 3 mm zum Einsatz (Patentanspruch 3).

Zur Anwendung gelangt vorzugsweise ein härtbarer Stahl. Insbesondere bietet sich eine Stahllegierung mit an, die in Gewichtsprozent ausgedrückt besteht aus:
Kohlenstoff (C) 0,18 % bis 0,3 %
Silizium (Si) 0,1 % bis 0,7 %
Mangan (Mn) 1,0 bis 2,50 %
Chrom (Cr) 0,1 % bis 0,8 %
Molybdän (Mo) 0,1 % bis 0,5 %
Titan (Ti) 0,02 % bis 0,05 %
Bor (B) 0,002 % bis 0,005 %
Aluminium (Al) 0,01 % bis 0,06 %
Schwefel maximal 0,01 %
Phosphor (P) maximal 0,025 %

Rest Eisen einschließlich erschmelzungsbedingter Verunreinigungen. Gemäß Patentanspruch 4 ist vorgesehen, dass zwei parallel nebeneinander angeordnete Längsprofile ein Doppelprofil bilden. Diese Ausführungsform kommt vorzugsweise dann zur Anwendung, wenn höhere Steifigkeitsanforderungen, beispielsweise bei größeren Kraftfahrzeugen, geforderdert sind.

Die Erfindung ist nachfolgend anhand von in den Zeichnungen dargestellten Ausführungsbeispielen näher beschrieben. Es zeigen:
- Figur 1: einen erfindungsgemäßen Seitenaufprallträger in perspektivischer Darstellungsweise und
- Figuren 2 bis 4: jeweils einen vertikalen Querschnitt durch das Längsprofil eines Seitenaufprallträgers.

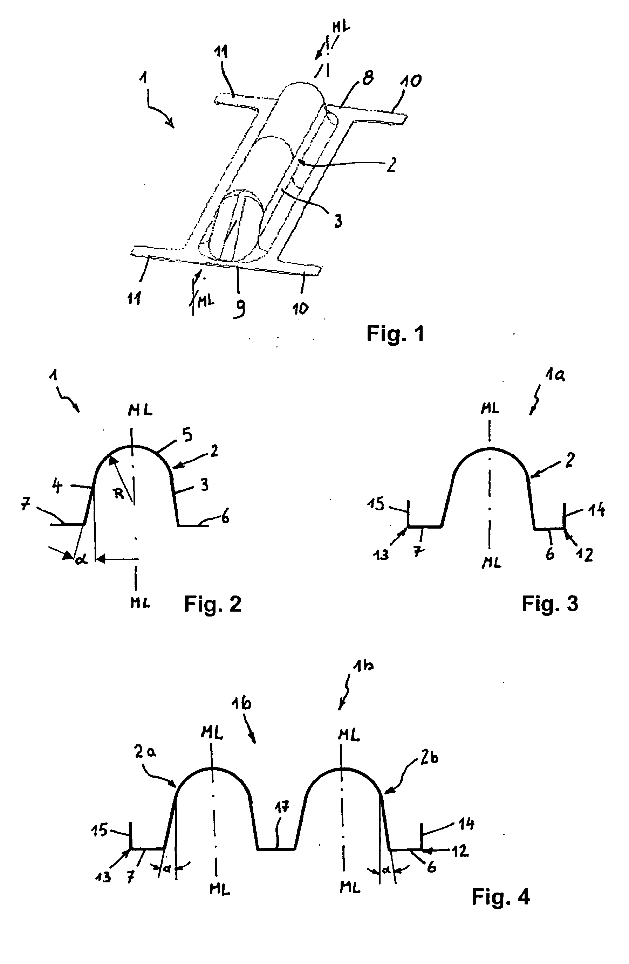

In den Figuren 1 bis 4 tragen einander entsprechende Bauteilkomponenten bzw. Bereiche die gleichen Bezugszeichen.

Die Figur 1 zeigt einen Seitenaufprallträger 1 zur Eingliederung in eine hier nicht dargestellte Fahrzeugtür eines Kraftfahrzeugs. Der Seitenaufprallträger 1 besteht aus Stahlblech einer Dicke zwischen 1,0 mm und 3,0 mm und soll die Fahrzeugtür bei einem Seitenaufprall aussteifen und unter homogener Verformung Energie absorbieren.

Auf dem überwiegenden Teil seiner Länge weist der Seitenaufprallträger 1 ein im Querschnitt offenes Längsprofil 2 auf mit einem zwei Schenkel 3, 4 verbindenden Boden 5. Von den Schenkeln 3, 4 stehen jeweils seitlich quer Stege 6, 7 ab.

Man erkennt anhand der Figur 1, dass der Seitenaufprallträger 1 endseitig jeweils Endabschnitte 8, 9 aufweist mit quer zur Mittellängsebene ML des Seitenaufprallträgers 1 abstehenden Seitenlaschen 10, 11.

Erfindungswesentlich ist der Boden 5 halbrohrartig gekrümmt. Der Radius ist in der Figur 2 durch R gekennzeichnet. Die Schenkel 3, 4 schließen sich an den Boden 5 in homogener Verlängerung an, wobei die Schenkel 3, 4 mit einem Öffnungswinkel α größer oder gleich 10° nach außen gestellt sind bezogen auf die Mittellängsebene ML. Diese Maßnahme führt zu einem belastungsoptimierten Querschnitt des Längsprofils 2. Hohe lokale Spannungen oder Dehnungen werden deutlich reduziert. Bezogen auf die Mittellängsebene ML sind die Längsprofile 2, 2a, 2b symmetrisch ausgebildet. Der Seitenaufprallträger 1, 1 a, 1b insgesamt besitzt ein homogenes Verformungsverhalten, so dass Knicken oder Brechen des Längsprofils 2 vermieden werden kann.

Bei den Seitenaufprallträgern 1b, 1 c sind an den Längskanten 12, 13 der Stege 6, 7 quer abstehende in Richtung des Bodens 5 weisende Flansche 14, 15 vorgesehen.

Bei dem Seitenaufprallträger 1 (Figur 4) erkennt man ferner, dass zwei Längsprofile 2a, 2b ein Doppelprofil 16 mit einem gemeinsamen Mittelsteg 17 bilden.

### Bezugiszeichenaufstellung

- 1 -: Seitenaufprallträger
- 1 a -: Seitenaufprallträger
- 1 b -: Seitenaufprallträger
- 2 -: Längsprofil
- 2a -: Längsprofil
- 2b -: Längsprofil
- 3 -: Schenkel
- 4 -: Schenkel
- 5 -: Boden
- 6 -: Steg
- 7 -: Steg
- 8 -: Endabschnitt
- 9 -: Endabschnitt
- 10 -: Seitenlasche
- 11 -: Seitenlasche
- 12 -: Längskante
- 13 -: Längskante
- 14 -: Flansch
- 15 -: Flansch
- 16 -: Doppelprofil
- 17 -: Mittelsteg

- α -: Öffnungswinkel
- ML -: Mittellängsebene v. 1
- R -: Radius

## Patentansprüche

1. Seitenaufprallträger zur Eingliederung in ein Kraftfahrzeug, welcher auf mindestens dem überwiegenden Teil seiner Länge wenigstens ein im Querschnitt offenes Längsprofil (2, 2a, 2b) aus Metallblech mit einem zwei Schenkel (3, 4) verbindenden Boden (5) und zwei von den Schenkeln (3, 4) jeweils quer abstehende Stege (6, 7) aufweist, **dadurch gekennzeichnet, dass** der Boden (5) halbrohrartig mit Radius R gekrümmt ist und die sich an den Boden (5) anschließenden Schenkel (3, 4) zur Mittellängsebene (ML) mit einem Öffnungswinkel (α) von größer oder gleich 10° nach außen gestellt sind.

2. Seitenaufprallträger nach Patentanspruch 1, **dadurch gekennzeichnet, dass** an den Längskanten (12, 13) der Stege (6, 7) quer abstehende Flansche (14, 15) vorgesehen sind.

3. Seitenaufprallträger nach Patentanspruch 1 oder 2, **dadurch gekennzeichnet, dass** das Metallblech eine Dicke von 1,0 bis 3,0 mm besitzt.

4. Seitenaufprallträger nach einem der Patentansprüche 1 bis 3, **dadurch gekennzeichnet, dass** zwei Längsprofile (2a, 2b) ein Doppelprofil (16) bilden.

## Claims

1. Side impact beam for incorporating into a motor vehicle, which side impact beam has over at least most of its length at least one longitudinal profile (2, 2a, 2b), open in cross section and made of metal sheet and having a base (5) connecting two legs (3, 4), and two webs (6, 7) in each case projecting transversely from the legs (3, 4), **characterized in that** the base (5) is curved in a semi-tubular manner with a radius R, and the legs (3, 4) adjoining the base (5) are set outwards relative to the centre longitudinal plane (ML) with an opening angle (α) greater than or equal to 10°.

2. Side impact beam according to Patent Claim 1, **characterized in that** transversely projecting flanges (14, 15) are provided on the longitudinal edges (12, 13) of the webs (6, 7).

3. Side impact beam according to Patent Claim 1 or 2, **characterized in that** the metal sheet has a thickness of 1.0 to 3.0 mm.

4. Side impact beam according to one of Patent Claims 1 to 3, **characterized in that** two longitudinal profiles (2a, 2b) form a double profile (16).

## Revendications

1. Poutre d'enfoncement latérale destinée à être incorporée dans un véhicule automobile, sur laquelle au moins une partie prépondérante de sa longueur présente au moins un profil longitudinal (2, 2a, 2b) ouvert dans sa section transversale, réalisé à partir de tôle métallique, avec un fond (5) reliant deux ailes (3, 4), et deux âmes (6, 7) faisant saillie transversalement, respectivement, par rapport aux ailes (3, 4), **caractérisée en ce que** le fond (5) est cintré en forme de semi-tube de rayon (R) et les ailes (3, 4) se raccordant au fond (5) sont orientées vers l'extérieur par rapport au plan longitudinal médian (ML) avec un angle d'ouverture (α) qui est supérieur ou égal à 10°.

2. Poutre d'enfoncement latérale selon la revendication 1, **caractérisé en ce que**, sur les bords longitudinaux (12, 13) des âmes (6, 7) sont prévues des brides (14, 15) faisant saillie transversalement.

3. Poutre d'enfoncement latérale selon la revendication 1 ou la revendication 2, **caractérisée en ce que** la tôle métallique présente une épaisseur comprise entre 1,0 et 3,0 mm.

4. Poutre d'enfoncement latérale selon l'une des revendications 1 à 3, **caractérisée en ce que** deux profils longitudinaux (2a, 2b) forment un double profil (16).
